# EUROPÄISCHE PATENTSCHRIFT

(11) **EP 3 098 100 B1**
(45) Veröffentlichungstag und Bekanntmachung des Hinweises auf die Patenterteilung: **29.04.2020**
(21) Anmeldenummer: 16159868.5
(22) Anmeldetag: 11.03.2016
(51) Int. Cl.: B60H 1/00, F16L 3/23

(54) **LUFTFÜHRUNGSANORDNUNG FÜR EIN KRAFTFAHRZEUG SOWIE VERFAHREN ZUR HERSTELLUNG EINER LUFTFÜHRUNGSANORDNUNG FÜR EIN KRAFTFAHRZEUG**
AIR GUIDANCE SYSTEM FOR A MOTOR VEHICLE AND METHOD FOR PRODUCING AN AIR GUIDANCE SYSTEM FOR A MOTOR VEHICLE
DISPOSITIF DE GUIDAGE DE L'AIR POUR UN VEHICULE AUTOMOBILE, AINSI QUE PROCEDE DE FABRICATION D'UN DISPOSITIF DE GUIDAGE DE L'AIR POUR UN VEHICULE AUTOMOBILE

(30) Priorität: 27.05.2015 DE 102015108341
(43) Veröffentlichungstag der Anmeldung: 30.11.2016
(73) Patentinhaber: REHAU AG + Co, 95111 Rehau (DE)
(72) Erfinder: Brendel, Manuel, 08523 Plauen (DE); Walters, Gerhard, 95182 Döhlau (OT Tauperlitz) (DE)

(56) Entgegenhaltungen:
- EP-A1- 2 062 759
- WO-A2-02/32702
- GB-A- 2 332 887
- US-A1- 2009 243 322
- US-A1- 2011 009 045

## Beschreibung

Die vorliegende Erfindung betrifft eine Luftführungsanordnung für ein Kraftfahrzeug, umfassend einen ersten Luftführungskanal und wenigstens einen separaten Luftführungskanal, wobei die Luftführungskanäle jeweils eine länglich ausgebildeten Kanalwandung aufweisen, die jeweils einen Hohlraum zur Leitung der Luft begrenzen, der zwischen wenigstens einer Lufteinlassöffnung und wenigstens einer Luftauslassöffnung liegt, und wobei die Luftführungskanäle über eine erste Rastverbindung aus einem ersten Rastelement und einem ersten Rastgegenelement und über wenigstens eine zweite Rastverbindung aus einem zweiten Rastelement und einem zweiten Rastgegenelement miteinander verbunden sind. Ferner Teil der Erfindung ist ein Verfahren zur Herstellung einer Luftführungsanordnung für ein Kraftfahrzeug.

Eine Luftführungsanordnung für ein Kraftfahrzeug kann beispielhaft der DE 101 37 998 A1 entnommen werden. Eine dort offenbarte Luftführungsanordnung verbindet hierbei jedoch lediglich einen ersten Luftführungskanal und wenigstens einen separaten zweiten Luftführungskanal derart, dass die Luftauslassöffnung des ersten Luftführungskanals in die Lufteinlassöffnung des zweiten Luftführungskanals eingesteckt wird, so dass insgesamt ein zusammenhängender Luftführungskanal in Längserstreckungsrichtung hintereinander angeordneter einzelner Luftführungskanäle gebildet wird. Eine gattungsgemäße Luftführungsanordnung ist in der WO 02/32702 A2 offenbart.

Die vorliegende Erfindung beschäftigt sich jedoch demgegenüber mit der Herstellung von einer mehrkanaligen Luftführungsanordnung, also einer Luftführungsanordnung, die mehrere Lufteintrittsöffnungen und mehrere Luftaustrittsöffnungen aufweist. Insbesondere bei der Herstellung derartiger Luftführungsanordnungen in einem Blasformverfahren oder in einem Thermoformverfahren (insbesondere Vakuum-Tiefziehen mit zwei Platten) ist es vielfach aufgrund der großen Umformwege und der filigranen Werkzeugwandungen die hierfür notwendig wären unmöglich diese einzelnen Luftführungskanäle in einem einzigen Werkzeug herzustellen, so dass derartige Verfahren für mehrkanalige Luftführungsanordnungen nicht oder nur in Sonderfällen einsetzbar sind. Die Herstellung von komplexen mehrkanaligen Luftführungsanordnungen im Spritzguss scheidet ebenfalls aus, da die hierfür erforderlichen Schieber in dem Werkzeug zur Herstellung der jeweiligen Hohlräume sehr aufwendig sind - wenn die Hohlräume überhaupt hinterschnittfrei über einen derartigen Schieber erzeugbar sind.

Im der Anmelderin bekannten Stand der Technik werden die Luftführungskanäle daher jeweils separat in einem Blasformungsverfahren oder in einem Thermoformverfahren hergestellt und auch einzeln in entsprechende Kraftfahrzeuge verbaut. Der Nachteil besteht hierbei darin, dass für jeden einzelnen Luftführungskanal dann eigene Befestigungspunkte im Kraftfahrzeug notwendig sind. Des Weiteren besteht zudem die Gefahr, dass die Luftführungskanäle falsch in das Kraftfahrzeug eingebaut werden können, d.h. das Lufteinlassöffnung und Luftauslassöffnung vertauschbar sind und zudem der Luftführungskanal in seiner bestimmungsgemäßen Orientierung hinsichtlich der Ober- und Unterseite ebenfalls vertauscht werden kann. Bereits bei zwei Luftführungskanälen existieren eine Vielzahl verschiedener Möglichkeiten, die Luftführungskanäle in Relation zueinander zu positionieren. Erhöht man die Zahl der Luftführungskanal bei der mehrkanaligen Luftführungsanordnung, erhöht sich entsprechend die Fehleranfälligkeit bei Einbau der einzelnen Luftführungskanäle in das Kraftfahrzeug.

Aufgabe der vorliegenden Erfindung ist es daher, eine Luftführungsanordnung sowie ein Verfahren zur Herstellung einer Luftführungsanordnung anzugeben, das eine Realisierung einer kostengünstigen und gleichzeitig kompakten mehrkanaligen Luftführungsanordnung ermöglicht.

Diese Aufgabe wird vorliegend dadurch gelöst, dass die Rastverbindungen einstückig aus der jeweiligen Kanalwandung des ersten Luftführungskanals und des zweiten Luftführungskanals geformt sind und, dass die Luftführungskanäle in ihren Längserstreckungsrichtungen nebeneinander angeordnet sind, um eine mehrkanalige Luftführungsanordnung zu bilden. Die einstückige Ausbildung der Rastverbindungen in den jeweiligen Kanalwandungen des ersten Luftführungskanals und des zweiten Luftführungskanals erlaubt es ohne zusätzliche Verbindungselemente die beiden Luftführungskanäle miteinander zu verbinden. Hierbei sind die Rastverbindungen derart an der jeweiligen Kanalwandung ausgeformt, dass die Luftführungskanäle in ihren Längserstreckungsrichtungen nebeneinander angeordnet miteinander verrastbar sind.

Durch die Verbindung der beiden Luftführungskanäle über einstückig aus den jeweiligen Kanalwandungen ausgeformten Rastverbindungen kann eine bereits vollständig vorkonfektionierte mehrkanalige Luftführungsanordnung an den Verbau- bzw. Zusammenbauort des Kraftfahrzeuges geliefert werden und somit die bereits zusammengefügte mehrkanalige Luftführungsanordnung verbausicher in das Kraftfahrzeug integriert werden.

Wenigstens das zweite Rastelement ist als Rastdom ausgebildet sein und an dem ersten Luftführungskanal oder dem zweiten Luftführungskanal ausgeformt sein. Der Rastdom kann hierbei einen kreisförmigen oder ovalen oder elliptischen Querschnitt aufweisen.

Wenigstens das zweite Rastgegenelement ist als Rastdomaufnahme ausgebildet und entsprechend an dem ersten Luftführungskanal oder dem zweiten Luftführungskanal ausgeformt. Dies bedeutet, dass wenn der Rastdom an dem ersten Luftführungskanal ausgeformt ist, die Rastdomaufnahme entsprechend an dem zweiten Luftführungskanal ausgeformt ist bzw. wenn der Rastdom an dem zweiten Luftführungskanal ausgeformt ist, die Rastdomaufnahme entsprechend an dem ersten Luftführungskanal ausgeformt ist.

Der Rastdom weist wenigstens eine den Rastdom hinterschneidend ausgebildete Ausformung auf der Rastdomflanke auf, deren Endbereich mit einem Abstand von der Domflanke beabstandet ist. Die Ausformung kann hierbei insbesondere ein Rastvorsprung sein, der von dem Rastdom oder von der Domflanke absteht.

Die Rastdomaufnahme weist eine Eintrittsöffnung mit unterschiedlichen Öffnungsbreiten auf. Hierbei ist die längste Öffnungsbreite der Eintrittsöffnung größer oder gleich der Breite des Rastdoms mit der Ausformung oder der Breite des Rastdoms mit den Ausformungen (falls mehrere Ausformungen vorgesehen sind). Die kleinste Öffnungsbreite ist größer oder gleich der Breite des Rastdoms und kleiner als die Breite des Rastdoms mit der Ausformung oder mit den Ausformungen. Die Ausformung oder die Ausformungen sind hierbei so gestaltet, dass diese bei einer Orientierung längs bzw. in Richtung der längsten Öffnungsbreite der Eintrittsöffnung in die Eintrittsöffnung einführbar sind.

Die Rastdomaufnahme kann im Bereich der kleinsten Öffnungsbreite wenigstens eine die Eintrittsöffnung hinterschneidend ausgebildete Ausformungsaufnahme zur Aufnahme der Ausformung aufweisen. Für den Fall, dass mehrere Ausformungen vorgesehen sind, sind entsprechend mehrere Ausformungsaufnahmen vorgesehen.

Die Eintrittsöffnung ist bevorzugt rechteckig, oval und / oder elliptisch und/oder teilweise kreisförmig ausgebildet. Diese Geometrien ermöglichen es, neben der nachfolgend beschriebenen vereinfachten Verbindung der beiden Luftführungskanäle miteinander, zudem in der Verrastposition einen gewissen thermischen Ausgleich bei unterschiedlicher thermischer Ausdehnung der beiden Luftführungskanäle auszugleichen.

Bevorzugt ist der eine Ausformung aufweisende Rastdom und die eine Eintrittsöffnung aufweisende Rastdomaufnahme so ausgebildet und aufeinander abgestimmt, dass die zweite Rastverbindung über eine relative Drehbewegung der Luftführungen zueinander verrastbar ist. Die relative Drehbewegung der Luftführungen zueinander erfolgt hierbei bevorzugt gegenläufig. Eine derartige Ausgestaltung der Luftführungsanordnung ermöglicht es, die beiden Luftführungskanäle zunächst derart zueinander zu positionieren, dass deren Längserstreckungsrichtungen in etwa senkrecht aufeinander stehen, um dann den Rastdom in die Eintrittsöffnung der Rastdomaufnahme einzuführen, um dann über eine Drehbewegung der Luftführung relativ zueinander die zweite Rastverbindung zu verrasten, indem die Ausformung des Rastdoms in die entsprechende Ausformungsaufnahme der Rastdomaufnahme einrastet. Erst dann erfolgt eine Verrastung der ersten Rastverbindung. Eine derartige Verbindung der beiden Luftführungskanäle über eine Drehbewegung ermöglicht es die beiden Luftführungskanäle zu verbinden, ohne das eine Druck- bzw. Quetschbelastung auf die Wandungen der Luftführungskanäle ausgeübt werden muss. Insbesondere wenn die Rastverbindung sich in einem Bereich der Luftführungskanäle befindet, bei dem eine Stützung des Rastdoms bzw. der Rastdomaufnahme von innerhalb des jeweiligen Luftführungskanals bzw. der beiden Luftführungskanäle nicht möglich ist, besteht ansonsten die Gefahr, dass es zu einer Beschädigung der Rastverbindung kommt bzw. aufgrund der fehlenden Gegenkräfte die Rastverbindung gar nicht erst hergestellt werden kann, da der Rastdom bzw. die Rastdomaufnahme der für die Herstellung der Rastverbindung erforderlichen Druckkraft ausweicht.

Besonders bevorzugt ist bzw. sind der erste Luftführungskanal und / oder der zweite Luftführungskanal in einem Blasformverfahren oder in einem Thermoformverfahren (insbesondere einem Vakuum-Tiefziehen mit zwei Platten) hergestellt. Die Luftführungskanäle bestehen bevorzugt aus einem thermoplastischen Kunststoffmaterial. Das Kunststoffmaterial kann insbesondere ein Polyolefin (bevorzugt Polypropylen oder Polyethylen) oder ein Polyamid umfassen.

Auch die erste Rastverbindung kann wie die vorstehend beschriebene zweite Rastverbindung ausgebildet sein. Dies erhöht die Flexibilität beim Zusammenbau der Luftführungsanordnung, da es nunmehr egal ist welche der beiden Rastverbindungen über eine Drehbewegung verrastbar ist.

Die vorliegende Erfindung umfasst ferner ein Verfahren zur Herstellung einer Luftführungsanordnung für ein Kraftfahrzeug, insbesondere zur Herstellung einer erfindungsgemäßen Luftführungsanordnung wie vorstehend, oder wie in den Ansprüchen 1 bis 5, beschrieben.

Das Verfahren zur Herstellung einer Luftführungsanordnung für ein Kraftfahrzeug mit einem ersten Luftführungskanal und wenigstens einem separaten zweite Luftführungskanal, wobei die Luftführungskanäle jeweils eine länglich ausgebildete Kanalwandung aufweisen, die jeweils einen Hohlraum zur Leitung der Luft begrenzen, der zwischen wenigstens einer Lufteinlassöffnung und wenigstens einer Luftauslassöffnung liegt, und wobei die Luftführungskanäle über eine erste Rastverbindung aus einem ersten Rastelement und einem ersten Rastgegenelement und über wenigstens eine zweite Rastverbindung aus einem zweiten Rastelement und einem zweiten Rastgegenelement miteinander verbindbar sind, wobei die Rastverbindungen einstückig aus der jeweiligen Kanalwandung des ersten Luftführungskanals und des zweiten Luftführungskanals geformt sind, umfasst die folgenden Schritte:
Verbinden der Rastverbindungen, so dass die Luftführungskanäle in ihren Längserstreckungsrichtungen nebeneinander angeordnet sind um eine mehrkanalige Luftführungsanordnung zu bilden.

Das Verfahren zur Herstellung einer Luftführungsanordnung ist hierbei ferner wie folgt ausgebildet:
Wenigstens das zweite Rastelement ist als Rastdom ausgebildet und an dem ersten Luftführungskanal oder dem zweiten Luftführungskanal ausgeformt und das wenigstens zweite Rastgegenelement ist als Rastdomaufnahme ausgebildet und ist entsprechend an dem ersten Luftführungskanal oder dem zweiten Luftführungskanal ausgeformt und, der Rastdom weist wenigstens eine den Rastdom hinterschneidend ausgebildete Ausformung auf der Domflanke auf, deren Endbereiche mit einem Abstand von der Domflanke beabstandet ist und, die Rastdomaufnahme weist eine Eintrittsöffnung mit unterschiedlichen Öffnungsbreiten auf, wobei die längste Öffnungsbreite der Eintrittsöffnung größer oder gleich der Breite des Rastdoms mit der Ausformung oder mit den Ausformungen ist, und die kleinste Öffnungsbreite größer oder gleich der Breite des Rastdoms und kleiner als die Breite des Rastdoms mit der Ausformung oder mit den Ausformungen ist und, die Rastdomaufnahme im Bereich der kleinsten Öffnungsbreite wenigstens eine die Eintrittsöffnung hinterschneidend ausgebildete Ausformungsaufnahme zur Aufnahme der Ausformung aufweist, wobei die Ausformung des Rastdoms oder die Ausformungen des Rastdoms zunächst in Richtung der längsten Öffnungsbreite der Eintrittsöffnung orientiert, dann der Rastdom durch die Eintrittsöffnung in die Rastdomaufnahme eingeschoben und über eine, vorzugsweise gegenläufige, relative Drehbewegung der Luftführungen zueinander die zweite Rastverbindung verrastet wird, indem die Ausformung oder die Ausformungen bis in die Ausformungsaufnahme oder bis in die Ausformungsaufnahmen gedreht wird oder werden, bevor dann die erste Rastverbindung verrastet wird.

Die Drehbewegung kann insbesondere eine gegenläufige Drehbewegung sein.

Auch die erste Rastverbindung kann wie die vorstehend beschriebene zweite Rastverbindung ausgebildet sein. Dies erhöht die Flexibilität beim Zusammenbau der Luftführungsanordnung, da es nunmehr egal ist welche der beiden Rastverbindungen über eine Drehbewegung verrastbar ist. Entsprechend gilt das vorstehend beschriebene Verfahren dann analog für die erste Rastverbindung.

Die Erfindung wird anhand der lediglich Ausführungsbeispiele darstellenden Zeichnungen näher erläutert, wobei gleiche oder funktionsgleiche Elemente mit den gleichen Bezugszeichen versehen sind. Die Figuren zeigen:
- Fig. 1: eine Seitenansicht eines ersten Luftführungskanals;
- Fig. 2: eine Seitenansicht eines zweiten Luftführungskanals;
- Fig. 3: eine dreidimensionale Explosionsdarstellung einer mehrkanaligen Luftführungsanordnung aus einem ersten, zweiten und einem dritten Luftführungskanal;
- Fig. 4: die Positionierung eines ersten Luftführungskanals in Relation zu einem zweiten Luftführungskanal vor dem Verrasten einer zweiten Rastverbindung;
- Fig. 5: die Darstellung gemäß Fig. 4 aus einer anderen Perspektive;
- Fig. 6: die beiden Luftführungskanäle aus Fig. 4 und 5, bei denen Rastdom und Rastdomaufnahme ineinander geschoben sind;
- Fig. 6a: eine Schnittdarstellung durch die zweite Rastverbindung in der endgültigen Verrastposition;
- Fig. 7: eine dreidimensionale Darstellung von in ihren Längserstreckungen nebeneinander angeordneten Luftführungskanälen, die über Rastverbindungen miteinander verbunden sind.

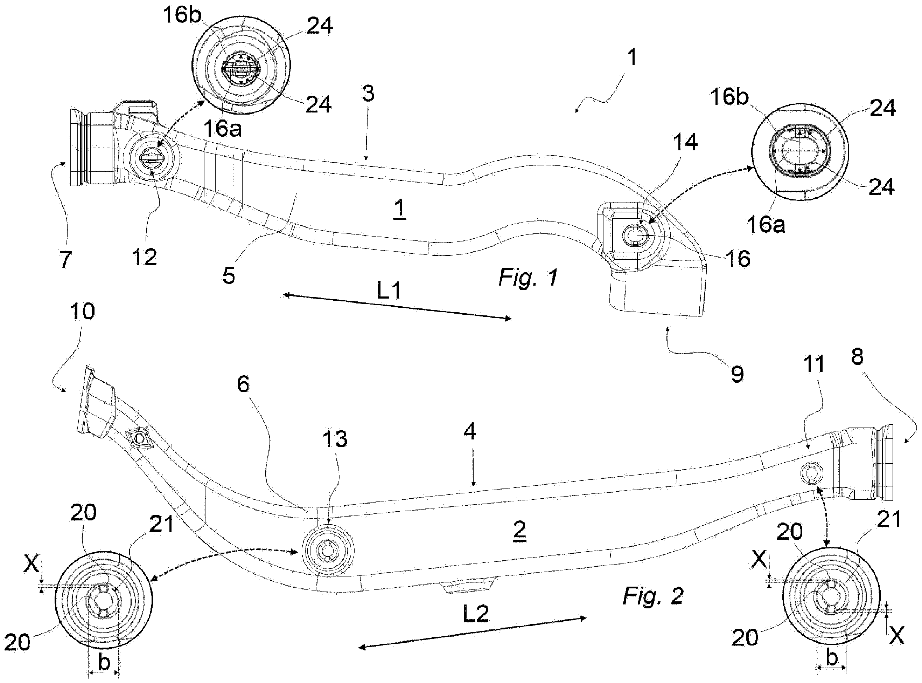

Die Fig. 1 zeigt als Teil einer Luftführungsanordnung für ein Kraftfahrzeug einen ersten Luftführungskanal 1, wobei der Luftführungskanal 1 eine länglich ausgebildete Kanalwandung 3 aufweist, die einen Hohlraum 5 zur Leitung der Luft begrenzt, der zwischen wenigstens einer Lufteinlassöffnung 7 und wenigstens einer Luftauslassöffnung 9 liegt.

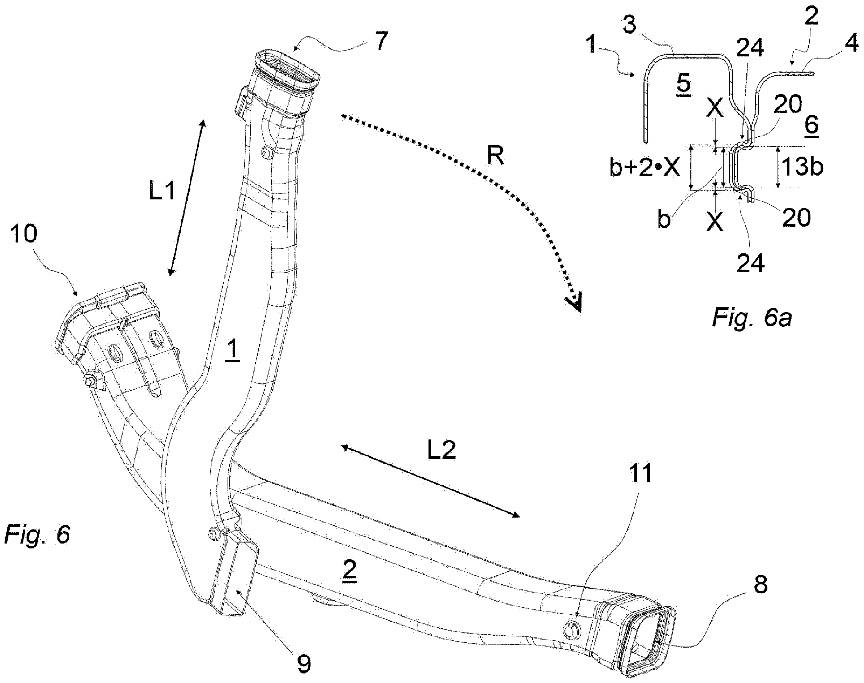

Ein weiterer Teil der Luftführungsanordnung für ein Kraftfahrzeug ist in Fig. 2 dargestellt und zeigt einen separaten zweiten Luftführungskanal 2, wobei der Luftführungskanal 2 eine länglich ausgebildete Kanalwandung 4 aufweist, die einen Hohlraum 6 zur Leitung der Luft begrenzt, der zwischen wenigstens einer Lufteinlassöffnung 8 und wenigstens einer Luftauslassöffnung 10 liegt. Die Luftführungskanäle 1, 2 (vgl. Fig. 1 und Fig. 2) können über eine erste Rastverbindung 11, 12 aus einem ersten Rastelement 11 und einem ersten Rastgegenelement 12 und über wenigstens eine zweite Rastverbindung 13, 14 aus einem zweiten Rastelement 13 und einem zweiten Rastgegenelement 14 miteinander verbunden werden. Die Rastverbindungen 11, 12, 13, 14 sind einstückig aus der jeweiligen Kanalwandung 3, 4 des ersten Luftführungskanals 1 und des zweiten Luftführungskanals 2 geformt. Die Rastverbindungen 11, 12, 13, 14 sind jeweils so angeordnet, dass die Luftführungskanäle 1, 2 in ihren Längserstreckungsrichtungen L1, L2 nebeneinander angeordnet werden können, um eine mehrkanalige Luftführungsanordnung zu bilden. Der in Fig. 2 dargestellte zweite Luftführungskanal 2 müsste hierzu entsprechend gedreht werden, um die jeweiligen Lufteinlassöffnungen 7, 8 der Luftführungskanäle 1, 2 nebeneinander zu positionieren. Da hierbei die Rastelemente 11 und 13 in der Darstellung gemäß Fig. 2 nicht mehr sichtbar wären, sind in Fig. 1 und Fig. 2 die entsprechenden sich kontaktierenden Seiten der Luftführungskanäle 1, 2 dargestellt. Das zweite Rastelement 13 ist als Rastdom ausgebildet und an dem zweiten Luftführungskanal 2 ausgeführt. Alternativ kann der Rastdom 13 auch an dem ersten Luftführungskanal 1 ausgeformt sein. Das zweite Rastgegenelement 14 ist als Rastdomaufnahme ausgebildet und entsprechend an dem ersten Luftführungskanal 1 ausgeformt. Für den Fall, dass der Rastdom 13 an dem ersten Luftführungskanal 1 ausgeformt ist, ist entsprechend das zweite Rastgegenelement 14 als Rastdomaufnahme ausgebildet und an dem zweiten Luftführungskanal 2 ausgeformt. Der Rastdom 13 weist eine den Rastdom 13 hinterschneidend ausgebildete Ausformung 20 auf der Domflanke 21 auf, deren Endbereich mit einem Abstand X von der Domflanke 21 beabstandet ist. Die Ausformung 20 bildet hierbei einen von der Domflanke 21 abstehenden Rastvorsprung aus. In dem hier gezeigten Ausführungsbeispiel ist auf der Domflanke 21 eine weitere Ausformung 20 ausgebildet. Die Rastdomaufnahme 14 weist eine Eintrittsöffnung 16 mit unterschiedlichen Öffnungsbreiten 16a, 16b auf. Die längste Öffnungsbreite 16a der Eintrittsöffnung 16 ist größer oder gleich der Breite b + n·X (b plus n mal X, mit n gleich der Anzahl der Ausformungen) des Rastdoms 13 mit der Ausformung 20 oder mit den Ausformungen 20. Die kleinste Öffnungsbreite 16b ist größer oder gleich der Breite b des Rastdoms 13 und kleiner als die Breite b + n·X des Rastdoms 13 mit der Ausformung 20 oder mit den Ausformungen 20. Die Rastdomaufnahme 14 weist im Bereich der kleinsten Öffnungsbreite 16b wenigstens eine die Eintrittsöffnung 16 hinterschneidend ausgebildete Ausformungsaufnahme 24 zur Aufnahme der Ausformung 20 auf. Da in dem hier gezeigten Ausführungsbeispiel der Rastdom 13 zwei Ausformungen 20 aufweist, sind entsprechend zwei Ausformungsaufnahmen 24 vorgesehen. Die Eintrittsöffnung 16 ist vorliegend oval bzw. elliptisch ausgebildet, wobei ebenfalls eine rechteckige oder eine Kombination von rechteckig, oval oder elliptisch ausgestalteter Geometrie denkbar ist. Der eine Ausformung 20 aufweisende Rastdom 13 und die eine Eintrittsöffnung 16 aufweisende Rastdomaufnahme 14 sind so ausgebildet und so aufeinander abgestimmt, dass die zweite Rastverbindung 13, 14 über eine, vorzugsweise gegenläufige, relative Drehbewegung R (vgl. Fig. 6) der Luftführungen 1, 2 zueinander verrastbar ist. Der erste Luftführungskanal 1 und / oder der zweite Luftführungskanal 2 sind in einem Blasformverfahren oder in einem Thermoformverfahren hergestellt. Zur Veranschaulichung der ersten Rastverbindung 11, 12 und der zweiten Rastverbindung 13, 14 sind in Fig.1 und in Fig. 2 die entsprechenden Bereiche vergrößert dargestellt (in Kreisen dargestellt - Position gemäß den gestrichelten Doppelpfeilen). Auch die erste Rastverbindung 11, 12 kann wie die vorstehend beschriebene zweite Rastverbindung 13, 14 ausgebildet sein. Dies erhöht die Flexibilität beim Zusammenbau der Luftführungsanordnung, da es nunmehr egal ist welche der beiden Rastverbindungen 11, 12, 13, 14 über eine Drehbewegung verrastbar ist.

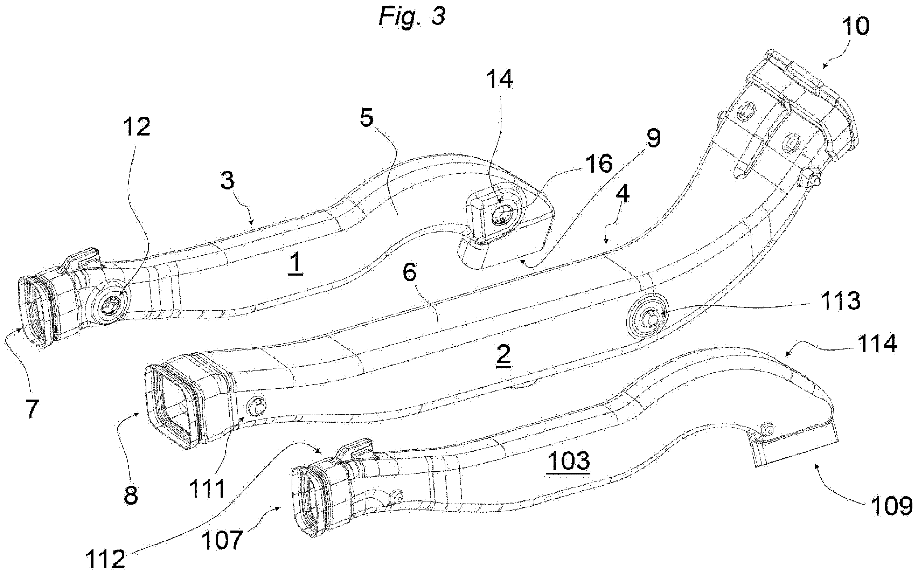

Die Fig. 3 zeigt eine Explosionsdarstellung der mehrkanaligen Luftführungsanordnung bzw. eine Darstellung der mehrkanaligen Luftführungsanordnung vor deren Zusammenbau. Die Luftführungskanäle 1, 2, 103 sind hierbei in ihren Längserstreckungsrichtungen nebeneinander angeordnet, jedoch noch nicht miteinander verrastet. Die in den Figuren 1 und 2 beschriebenen Elemente sind für die Bezugszeichen des dritten Luftführungskanals 103 jeweils entsprechend um die Zahl 100 erhöht.

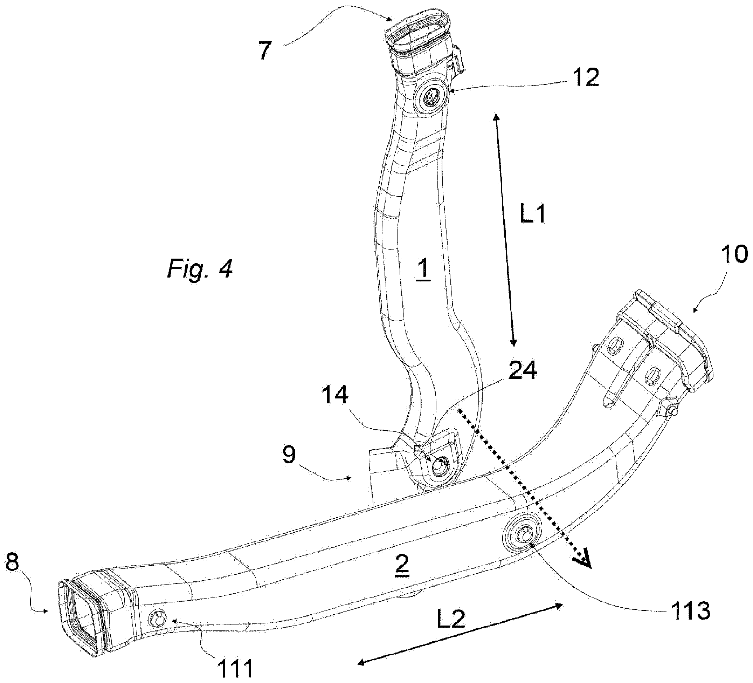

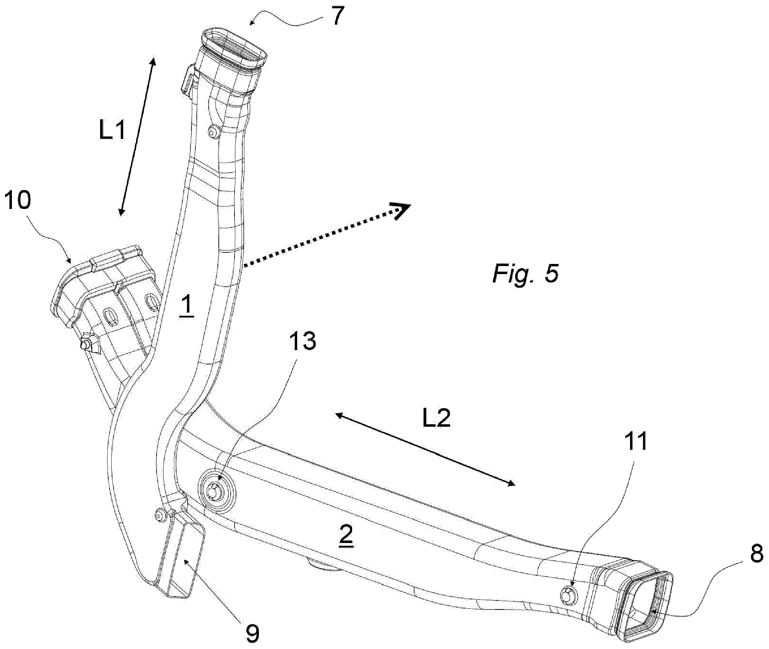

In Fig. 4 sind die in den vorstehenden Figuren beschriebenen Luftführungskanäle 1 und 2 dargestellt, wobei hier zunächst die Ausformung 20 bzw. die Ausformungen 20 des Rastdoms 13 in Richtung der längsten Öffnungsbreite 16a der Eintrittsöffnung 16 der Rastdomaufnahme 14 orientiert ist 7 sind. Die Orientierung der Luftführungskanäle 1 und 2 sowie der Ausformung 20 des Rastdoms 13 bzw. der Ausformungen 20 des Rastdoms 13 in Relation zu der Öffnungsbreite 16a der Eintrittsöffnung 16 der Rastdomaufnahme 14 ist zudem in Fig. 5 von einer anderen Perspektive dargestellt. Die Längserstreckungsrichtungen L1 und L2 der beiden Luftführungskanäle 1, 2 sind hierbei in etwa senkrecht zueinander orientiert.

In Fig. 6 ist der nächste Schritt zum Zusammenbau der mehrkanaligen Luftführungsanordnung dargestellt, indem der Rastdom 13 durch die Eintrittsöffnung 16 in die Rastdomaufnahme 14 eingeschoben und über eine, vorzugsweise gegenläufige, relative Drehbewegung R der Luftführungen 1, 2 zueinander die Rastverbindung 11, 12 verrastet wird, indem die Ausformung 20 bzw. die Ausformungen 20 bis in die Ausformungsaufnahme 24 bzw. bis in die Ausformungsaufnahmen 24 gedreht wird oder werden. Die Fig. 6a zeigt diesen entsprechenden Verbindungszustand in einem Querschnitt durch die zweite Rastverbindung 11, 12. In dem dann folgenden Schritt wird auch die erste Rastverbindung 11, 12 verrastet.

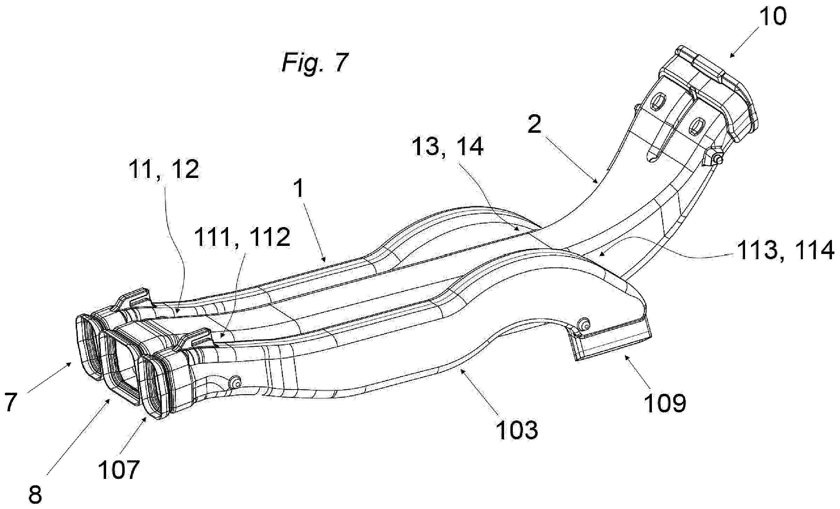

In der Fig. 7 ist in einer dreidimensionalen Darstellung die mehrkanalige Luftführungsanordnung dargestellt, welche aus durch Rastverbindungen miteinander verbundenen Luftführungskanälen 1, 2 und 103 gebildet wird. Die Luftführungskanäle 1, 2, 103 sind hierbei über die Rastverbindungen 11, 12, 13, 14, 111, 112 sowie 113, 114 untereinander entlang ihrer Längserstreckungsrichtungen miteinander verbunden.

Ein Verfahren zur Herstellung einer Luftführungsanordnung für ein Kraftfahrzeug, insbesondere einer Luftführungsanordnung wie vorstehend beschrieben, mit einem ersten Luftführungskanal 1 und mit wenigstens einem separaten zweiten Luftführungskanal 2, wobei die Luftführungskanäle 1, 2 jeweils eine länglich ausgebildete Kanalwandung 3, 4 aufweisen, die jeweils einen Hohlraum 5, 6 zur Leitung der Luft begrenzt, der zwischen wenigstens einer Lufteinlassöffnung 7, 8 und wenigstens einer Luftauslassöffnung 9, 10 liegt, und wobei die Luftführungskanäle 1, 2 über eine erste Rastverbindung 11, 12 aus einem ersten Rastelement 11 und einem ersten Rastgegenelement 12 und über wenigstens eine zweite Rastverbindung 13, 14 aus einem zweiten Rastelement 13 und einem zweiten Rastgegenelement 14 miteinander verbindbar sind, wobei die Rastverbindungen 11, 12, 13, 14 einstückig aus der jeweiligen Kanalwandung 3, 4 des ersten Luftführungskanals 1 und des zweiten Luftführungskanals 2 geformt sind, umfasst die folgenden Schritte:
Verbinden der Rastverbindungen 13, 14, so dass die Luftführungskanäle 1, 2 in ihren Längserstreckungsrichtungen L1, L2 nebeneinander angeordnet sind um eine mehrkanalige Luftführungsanordnung zu bilden.

Wenigstens das zweite Rastelement 13 ist als Rastdom ausgebildet und an dem ersten Luftführungskanal 1 oder dem zweiten Luftführungskanal 2 ausgeformt und, wenigstens das zweite Rastgegenelement 14 ist als Rastdomaufnahme ausgebildet und ist entsprechend an dem ersten Luftführungskanal 1 oder dem zweiten Luftführungskanal 2 ausgeformt. Der Rastdom 13 weist wenigstens eine den Rastdom 13 hinterschneidend ausgebildete Ausformung 20 auf der Domflanke 21 auf, deren Endbereich mit einem Abstand X von der Domflanke 21 beabstandet ist. Die Rastdomaufnahme 14 weist eine Eintrittsöffnung 16 mit unterschiedlichen Öffnungsbreiten 16a, 16 b auf, wobei die längste Öffnungsbreite 16a der Eintrittsöffnung 16 größer oder gleich der Breite b+n·X des Rastdoms 13 mit der Ausformung 20 oder mit den Ausformungen 20 ist, und die kleinste Öffnungsbreite 16b größer oder gleich der Breite b des Rastdoms 13 und kleiner als die Breite b+n·X des Rastdoms 13 mit der Ausformung 20 oder mit den Ausformungen 20 ist. Die Rastdomaufnahme 14 weist im Bereich der kleinsten Öffnungsbreite 16b wenigstens eine die Eintrittsöffnung 16 hinterschneidend ausgebildete Ausformungsaufnahme 24 zur Aufnahme der Ausformung 20 aufweist (vgl. Fig. 1 bis 3). Die Ausformung 20 des Rastdoms 13 oder die Ausformungen 20 des Rastdoms 13 wird / werden zunächst in Richtung der längsten Öffnungsbreite 16a der Eintrittsöffnung 16 orientiert, dann der Rastdom 13 durch die Eintrittsöffnung 16 in die Rastdomaufnahme 14 eingeschoben und über eine, vorzugsweise gegenläufige, relative Drehbewegung R der Luftführungen 1, 2 zueinander die zweite Rastverbindung 13, 14 verrastet in dem die Ausformung 20 oder die Ausformungen 20 bis in die Ausformungsaufnahme 24 oder bis in die Ausformungsaufnahmen 24 gedreht wird oder werden, bevor dann die erste Rastverbindung 11, 12 verrastet wird (vgl. Fig. 4 bis 6).

Auch die erste Rastverbindung 11, 12 kann wie die vorstehend beschriebene zweite Rastverbindung 13, 14 ausgebildet sein. Dies erhöht die Flexibilität beim Zusammenbau der Luftführungsanordnung, da es nunmehr egal ist welche der beiden Rastverbindungen 11, 12, 13, 14 über eine Drehbewegung verrastet wird. Entsprechend gilt das vorstehend beschriebene Verfahren dann analog für die erste Rastverbindung 11, 12.

## Patentansprüche

1. Luftführungsanordnung für ein Kraftfahrzeug, umfassend:
- einen ersten Luftführungskanal (1) und
- wenigstens einen separaten zweiten Luftführungskanal (2),
wobei die Luftführungskanäle (1, 2) jeweils eine länglich ausgebildete Kanalwandung (3, 4) aufweisen, die jeweils einen Hohlraum (5, 6) zur Leitung der Luft begrenzt, der zwischen wenigstens einer Lufteinlassöffnung (7, 8) und wenigstens einer Luftauslassöffnung (9, 10) liegt,
und wobei die Luftführungskanäle (1, 2) über eine erste Rastverbindung (11, 12) aus einem ersten Rastelement (11) und einem ersten Rastgegenelement (12) und über wenigstens eine zweite Rastverbindung (13, 14) aus einem zweiten Rastelement (13) und einem zweiten Rastgegenelement (14) miteinander verbunden sind und,
wobei die Luftführungskanäle (1, 2) in ihren Längserstreckungsrichtungen (L1, L2) nebeneinander angeordnet sind um eine mehrkanalige Luftführungsanordnung zu bilden,
**dadurch gekennzeichnet, dass**
die Rastverbindungen (11, 12, 13, 14) einstückig aus der jeweiligen Kanalwandung (3, 4) des ersten Luftführungskanals (1) und des zweiten Luftführungskanals (2) geformt sind und, dass wenigstens das zweite Rastelement (13) als Rastdom ausgebildet ist und an dem ersten Luftführungskanal (1) oder dem zweiten Luftführungskanal (2) ausgeformt ist, wobei wenigstens das zweite Rastgegenelement (14) als Rastdomaufnahme ausgebildet ist und entsprechend an dem ersten Luftführungskanal (1) oder dem zweiten Luftführungskanal (2) ausgeformt ist,
wobei der Rastdom (13) wenigstens eine den Rastdom (13) hinterschneidend ausgebildete Ausformung (20) auf der Domflanke (21) aufweist, deren Endbereich mit einem Abstand (X) von der Domflanke (21) beabstandet ist und,
wobei die Rastdomaufnahme (14) eine Eintrittsöffnung (16) mit unterschiedlichen Öffnungsbreiten (16a, 16b) aufweist, wobei die längste Öffnungsbreite (16a) der Eintrittsöffnung (16) größer oder gleich der Breite (b+n·X) des Rastdoms (13) mit der Ausformung (20) oder mit den Ausformungen (20) ist, und die kleinste Öffnungsbreite (16b) größer oder gleich der Breite (b) des Rastdoms (13) und kleiner als die Breite (b+n·X) des Rastdoms (13) mit der Ausformung (20) oder mit den Ausformungen (20) ist.

2. Luftführungsanordnung nach Anspruch 1, **dadurch gekennzeichnet, dass** die Rastdomaufnahme (14) im Bereich der kleinsten Öffnungsbreite (16b) wenigstens eine die Eintrittsöffnung (16) hinterschneidend ausgebildete Ausformungsaufnahme (24) zur Aufnahme der Ausformung (20) aufweist.

3. Luftführungsanordnung nach Anspruch 1 oder 2, **dadurch gekennzeichnet, dass** die Eintrittsöffnung (16) rechteckig, oval und/oder elliptisch ausgebildet ist.

4. Luftführungsanordnung nach einem der Ansprüche 1 bis 3, **dadurch gekennzeichnet, dass** der eine Ausformung (20) aufweisende Rastdom (13) und die eine Eintrittsöffnung (16) aufweisende Rastdomaufnahme (14) so ausgebildet und aufeinander abgestimmt sind, dass zweite Rastverbindung (13, 14) über eine, vorzugsweise gegenläufige, relative Drehbewegung (R) der Luftführungen (1, 2) zueinander verrastbar ist.

5. Luftführungsanordnung nach einem der vorstehend Ansprüche, **dadurch gekennzeichnet, dass** der erste Luftführungskanal (1) und/oder der zweite Luftführungskanal (2) in einem Blasformverfahren oder in einem Thermoformverfahren hergestellt ist/sind.

6. Verfahren zur Herstellung einer Luftführungsanordnung für ein Kraftfahrzeug, insbesondere einer Luftführungsanordnung nach einem der vorstehenden Ansprüche, mit
- einem ersten Luftführungskanal (1) und
- wenigstens einem separaten zweiten Luftführungskanal (2),
wobei die Luftführungskanäle (1, 2) jeweils eine länglich ausgebildete Kanalwandung (3, 4) aufweisen, die jeweils einen Hohlraum (5, 6) zur Leitung der Luft begrenzt, der zwischen wenigstens einer Lufteinlassöffnung (7, 8) und wenigstens einer Luftauslassöffnung (9, 10) liegt, und wobei die Luftführungskanäle (1, 2) über eine erste Rastverbindung (11, 12) aus einem ersten Rastelement (11) und einem ersten Rastgegenelement (12) und über wenigstens eine zweite Rastverbindung (13, 14) aus einem zweiten Rastelement (13) und einem zweiten Rastgegenelement (14) miteinander verbindbar sind, wobei die Rastverbindungen (11, 12, 13, 14) einstückig aus der jeweiligen Kanalwandung (3, 4) des ersten Luftführungskanals (1) und des zweiten Luftführungskanals (2) geformt sind,
umfassend die folgenden Schritte:
Verbinden der Rastverbindungen (11, 12, 13, 14), so dass die Luftführungskanäle (1, 2) in ihren Längserstreckungsrichtungen (L1, L2) nebeneinander angeordnet sind um eine mehrkanalige Luftführungsanordnung zu bilden,
wobei wenigstens das zweite Rastelement (13) als Rastdom ausgebildet ist und an dem ersten Luftführungskanal (1) oder dem zweiten Luftführungskanal (2) ausgeformt ist und, dass wenigstens das zweite Rastgegenelement (14) als Rastdomaufnahme ausgebildet ist und entsprechend an dem ersten Luftführungskanal (1) oder dem zweiten Luftführungskanal (2) ausgeformt ist und, dass der Rastdom (13) wenigstens eine den Rastdom (13) hinterschneidend ausgebildete Ausformung (20) auf der Domflanke (21) aufweist, deren Endbereich mit einem Abstand (X) von der Domflanke (21) beabstandet ist und, dass die Rastdomaufnahme (14) eine Eintrittsöffnung (16) mit unterschiedlichen Öffnungsbreiten (16a, 16b) aufweist, wobei die längste Öffnungsbreite (16a) der Eintrittsöffnung (16) größer oder gleich der Breite (b+n·X) des Rastdoms (13) mit der Ausformung (20) oder mit den Ausformungen (20) ist, und die kleinste Öffnungsbreite (16b) größer oder gleich der Breite (b) des Rastdoms (13) und kleiner als die Breite (b+n·X) des Rastdoms (13) mit der Ausformung (20) oder mit den Ausformungen (20) ist und, dass die Rastdomaufnahme (14) im Bereich der kleinsten Öffnungsbreite (16b) wenigstens eine die Eintrittsöffnung (16) hinterschneidend ausgebildete Ausformungsaufnahme (24) zur Aufnahme der Ausformung (20) aufweist,
wobei die Ausformung (20) des Rastdoms (13) oder die Ausformungen (20) des Rastdoms (13) zunächst in Richtung der längsten Öffnungsbreite (16a) der Eintrittsöffnung (16) orientiert, dann der Rastdom (13) durch die Eintrittsöffnung (16) in die Rastdomaufnahme (14) eingeschoben und über eine, vorzugsweise gegenläufige, relative Drehbewegung (R) der Luftführungen (1, 2) zueinander die zweite Rastverbindung (13, 14) verrastet wird in dem die Ausformung (20) oder die Ausformungen (20) bis in die Ausformungsaufnahme (24) oder bis in die Ausformungsaufnahmen (24) gedreht wird oder werden, bevor dann die erste Rastverbindung (11, 12) verrastet wird.

7. Verfahren zur Herstellung einer Luftführungsanordnung für ein Kraftfahrzeug nach Anspruch 6, **dadurch gekennzeichnet, dass** der erste Luftführungskanal (1) und der zweite Luftführungskanal (2) in einem Blasformverfahren und/oder in einem Thermoformverfahren hergestellt sind.

## Claims

1. Air guiding arrangement for a motor vehicle, comprising:
- a first air duct (1) and
- at least one separate second air duct (2),
wherein the air ducts (1, 2) each have an elongated duct wall (3, 4), which respectively delimits a cavity (5, 6) for conducting the air, which cavity lies between at least one air inlet opening (7, 8) and at least one air outlet opening (9, 10),
and wherein the air ducts (1, 2) are connected to one another via a first locking connection (11, 12) of a first locking element (11) and a first locking counter-element (12) and via at least a second locking connection (13, 14) of a second locking element (13) and a second locking counter-element (14),
and wherein the air ducts (1, 2) are arranged adjacent to one another in their longitudinal extension directions (L1, L2) in order to form a multiduct air guiding arrangement,
**characterised in that**
the locking connections (11, 12, 13, 14) are moulded in one piece out of the respective duct wall (3, 4) of the first air duct (1) and the second air duct (2), and that at least the second locking element (13) is designed as a locking dome and is formed on the first air duct (1) or the second air duct (2), wherein at least the second locking counter-element (14) is designed as a locking dome seating and is formed correspondingly on the first air duct (1) or the second air duct (2),
wherein the locking dome (13) has at least one moulding (20) formed undercutting the locking dome (13) on the dome flank (21), the end region of which moulding is spaced at a distance (X) from the dome flank (21), and
wherein the locking dome seating (14) has an inlet opening (16) with different opening widths (16a, 16b), wherein the longest opening width (16a) of the inlet opening (16) is greater than or equal to the width (b+n·X) of the locking dome (13) with the moulding (20) or with the mouldings (20), and the smallest opening width (16b) is greater than or equal to the width (b) of the locking dome (13) and smaller than the width (b+n·X) of the locking dome (13) with the moulding (20) or with the mouldings (20).

2. Air guiding arrangement according to claim 1, **characterised in that** the locking dome seating (14) in the region of the smallest opening width (16b) has at least one moulding seating (24) formed undercutting the inlet opening (16) to take up the moulding (20).

3. Air guiding arrangement according to claim 1 or 2, **characterised in that** the inlet opening (16) is designed to be rectangular, oval and/or elliptical.

4. Air guiding arrangement according to one of claims 1 to 3, **characterised in that** the locking dome (13) having a moulding (20) and the locking dome seating (14) having an inlet opening (16) are designed and coordinated to one another such that the second locking connection (13, 14) can be locked via a, preferably opposed, relative rotary movement (R) of the air ducts (1, 2) to one another.

5. Air guiding arrangement according to any one of the preceding claims, **characterised in that** the first air duct (1) and/or the second air duct (2) is/are manufactured in a blow moulding process or in a thermoforming process.

6. Method for manufacturing an air guiding arrangement for a motor vehicle, in particular an air guiding arrangement according to any one of the preceding claims, with
- a first air duct (1) and
- at least one separate second air duct (2),
wherein the air ducts (1, 2) each have an elongated duct wall (3, 4), which respectively delimits a cavity (5, 6) for conducting the air, which cavity lies between at least one air inlet opening (7, 8) and at least one air outlet opening (9, 10), and wherein the air ducts (1, 2) are connectable to one another via a first locking connection (11, 12) of a first locking element (11) and a first locking counter-element (12) and via at least a second locking connection (13, 14) of a second locking element (13) and a second locking counter-element (14), wherein the locking connections (11, 12, 13, 14) are moulded in one piece out of the respective duct wall (3, 4) of the first air duct (1) and the second air duct (2),
comprising the following steps:
connection of the locking connections (11, 12, 13, 14) so that the air ducts (1, 2) are arranged adjacent to one another in their longitudinal extension directions (L1, L2) in order to form a multiduct air guiding arrangement,
wherein at least the second locking element (13) is designed as a locking dome and is formed on the first air duct (1) or the second air duct (2), and that at least the second locking counter-element (14) is designed as a locking dome seating and is moulded accordingly on the first air duct (1) or the second air duct (2), and that the locking dome (13) has at least one moulding (20) formed undercutting the locking dome (13) on the dome flank (21), the end region of which moulding is spaced at a distance (X) from the dome flank (21), and that the locking dome seating (14) has an inlet opening (16) with different opening widths (16a, 16b), wherein the longest opening width (16a) of the inlet opening (16) is greater than or equal to the width (b+n·X) of the locking dome (13) with the moulding (20) or with the mouldings (20), and the smallest opening width (16b) is greater than or equal to the width (b) of the locking dome (13) and smaller than the width (b+n·X) of the locking dome (13) with the moulding (20) or with the mouldings (20), and that the locking dome seating (14) in the region of the smallest opening width (16b) has at least one moulding seating (24) formed undercutting the inlet opening (16) to take up the moulding (20),
wherein the moulding (20) of the locking dome (13) or the mouldings (20) of the locking dome (13) is or are oriented first in the direction of the longest opening width (16a) of the inlet opening (16), then the locking dome (13) is inserted into the locking dome seating (14) through the inlet opening (16) and via a, preferably opposing, relative rotary movement (R) of the air ducts (1, 2) to one another the second locking connection (13, 14) is locked in that the moulding (20) or the mouldings (20) is or are rotated into the moulding seating (24) or into the moulding seatings (24) before the first locking connection (11, 12) is then locked.

7. Method for the manufacture of an air guiding arrangement for a motor vehicle according to claim 6, **characterised in that** the first air duct (1) and the second air duct (2) are manufactured in a blow moulding process and/or in a thermoforming process.

## Revendications

1. Ensemble de guidage d'air pour un véhicule automobile, comprenant :
- un premier canal de guidage d'air (1) et
- au moins un deuxième canal de guidage d'air (2) séparé,
dans lequel les canaux de guidage d'air (1, 2) présentent respectivement une paroi de canal (3, 4) réalisée de manière allongée, qui délimite respectivement une cavité (5, 6) servant à acheminer de l'air, qui se situe entre au moins une ouverture d'entrée d'air (7, 8) et au moins une ouverture de sortie d'air (9, 10),
et dans lequel les canaux de guidage d'air (1, 2) sont reliés l'un à l'autre par l'intermédiaire d'une première liaison d'enclenchement (11, 12) composée d'un premier élément d'enclenchement (11) et d'un premier contre-élément d'enclenchement (12) et par l'intermédiaire d'au moins une deuxième liaison d'enclenchement (13, 14) composée d'un deuxième élément d'enclenchement (13) et d'un deuxième contre-élément d'enclenchement (14),
et dans lequel les canaux de guidage d'air (1, 2) sont disposés de manière juxtaposée dans leurs directions d'extension longitudinale (L1, L2) afin de former un ensemble de guidage d'air à plusieurs canaux,
**caractérisé en ce que**
les liaisons d'enclenchement (11, 12, 13, 14) sont formées d'un seul tenant à partir de la paroi de canal (3, 4) respective du premier canal de guidage d'air (1) et du deuxième canal de guidage d'air (2), qu'au moins le deuxième élément d'enclenchement (13) est réalisé en tant que dôme d'enclenchement et est formé au niveau du premier canal de guidage d'air (1) ou du deuxième canal de guidage d'air (2), dans lequel au moins le deuxième contre-élément d'enclenchement (14) est réalisé en tant que logement de dôme d'enclenchement et est formé de manière correspondante au niveau du premier canal de guidage d'air (1) ou du deuxième canal de guidage d'air (2),
dans lequel le dôme d'enclenchement (13) présente au moins une forme (20) réalisée en contre-dépouillant le dôme d'enclenchement (13) sur le flanc de dôme (21), dont la zone d'extrémité est tenue à distance du flanc de dôme (21) à une distance (X), et
dans lequel le logement de dôme d'enclenchement (14) présente une ouverture d'entrée (16) avec différentes largeurs d'ouverture (16a, 16b), dans lequel la plus longue largeur d'ouverture (16a) de l'ouverture d'entrée (16) est supérieure ou égale à la largeur (b+n·X) du dôme d'enclenchement (13) avec la forme (20) ou avec les formes (20), et la plus petite largeur d'ouverture (16b) est supérieure ou égale à la largeur (b) du dôme d'enclenchement (13) et inférieure à la largeur (b+n·X) du dôme d'enclenchement (13) avec la forme (20) ou avec les formes (20).

2. Ensemble de guidage d'air selon la revendication 1, **caractérisé en ce que** le logement de dôme d'enclenchement (14) présente, dans la zone de la plus petite largeur d'ouverture (16b), au moins un logement de forme (24) réalisée en contre-dépouillant l'ouverture d'entrée (16), servant à loger la forme (20).

3. Ensemble de guidage d'air selon la revendication 1 ou 2, **caractérisé en ce que** l'ouverture d'entrée (16) est réalisée de manière rectangulaire, de manière ovale et/ou de manière elliptique.

4. Ensemble de guidage d'air selon l'une quelconque des revendications 1 à 3, **caractérisé en ce que** le dôme d'enclenchement (13) présentant une forme (20) et le logement de dôme d'enclenchement (14) présentant une ouverture d'entrée (16) sont réalisés et sont adaptés l'un à l'autre de telle sorte que la deuxième liaison d'enclenchement (13, 14) peut être enclenchée par l'intermédiaire d'un mouvement de rotation (R) relatif, de préférence opposé, des guidages d'air (1, 2) l'un par rapport à l'autre.

5. Ensemble de guidage d'air selon l'une quelconque des revendications précédentes, **caractérisé en ce que** le premier canal de guidage d'air (1) et/ou le deuxième canal de guidage d'air (2) est/sont fabriqués dans un procédé de moulage par soufflage ou dans un procédé de thermoformage.

6. Procédé de fabrication d'un ensemble de guidage d'air pour un véhicule automobile, en particulier d'un ensemble de guidage d'air selon l'une quelconque des revendications précédentes, avec
- un premier canal de guidage d'air (1) et
- au moins un deuxième canal de guidage d'air (2) séparé,
dans lequel les canaux de guidage d'air (1, 2) présentent respectivement une paroi de canal (3, 4) réalisée de manière allongée, qui délimite respectivement une cavité (5, 6) servant à acheminer l'air, qui se situe entre au moins une ouverture d'entrée d'air (7, 8) et au moins une ouverture de sortie d'air (9, 10), et dans lequel les canaux de guidage d'air (1, 2) peuvent être reliés l'un à l'autre par l'intermédiaire d'une première liaison d'enclenchement (11, 12) composée d'un premier élément d'enclenchement (11) et d'un premier contre-élément d'enclenchement (12) et par l'intermédiaire d'au moins une deuxième liaison d'enclenchement (13, 14) composée d'un deuxième élément d'enclenchement (13) et d'un deuxième contre-élément d'enclenchement (14), dans lequel les liaisons d'enclenchement (11, 12, 13, 14) sont formées d'un seul tenant à partir de la paroi de canal (3, 4) respective du premier canal de guidage d'air (1) et du deuxième canal de guidage d'air (2),
comprenant les étapes suivantes :
de liaison des liaisons d'enclenchement (11, 12, 13, 14) de telle sorte que les canaux de guidage d'air (1, 2) sont disposés de manière juxtaposée dans leurs directions d'extension longitudinale (L1, L2) afin de former un ensemble de guidage d'air à plusieurs canaux,
dans lequel au moins le deuxième élément d'enclenchement (13) est réalisé en tant que dôme d'enclenchement et est formé au niveau du premier canal de guidage d'air (1) ou du deuxième canal de guidage d'air (2), et au moins le deuxième contre-élément d'enclenchement (14) est réalisé en tant que logement de dôme d'enclenchement et est formé de manière correspondante au niveau du premier canal de guidage d'air (1) ou du deuxième canal de guidage d'air (2), le dôme d'enclenchement (13) présente au moins une forme (20) réalisée en contre-dépouillant le dôme d'enclenchement (13) sur le flanc de dôme (21), dont la zone d'extrémité est tenue à distance du flanc de dôme (21) à une distance (X), le logement de dôme d'enclenchement (14) présente une ouverture d'entrée (16) avec différentes largeurs d'ouverture (16a, 16b), dans lequel la plus longue largeur d'ouverture (16a) de l'ouverture d'entrée (16) est supérieure ou égale à la largeur (b+n·X) du dôme d'enclenchement (13) avec la forme (20) ou avec les formes (20) et la plus petite largeur d'ouverture (16b) est supérieure ou égale à la largeur (b) du dôme d'enclenchement (13) et inférieure à la largeur (b+n·X) du dôme d'enclenchement (13) avec la forme (20) ou avec les formes (20), le logement de dôme d'enclenchement (14) présente dans la zone de la plus petite largeur d'ouverture (16b) au moins un logement de forme (24) réalisée en contre-dépouillant l'ouverture d'entrée (16), servant à loger la forme (20),
dans lequel la forme (20) du dôme d'enclenchement (13) ou les formes (20) du dôme d'enclenchement (13) sont orientées d'abord en direction de la plus longue largeur d'ouverture (16a) de l'ouverture d'entrée (16), puis le dôme d'enclenchement (13) est enfilé dans le logement de dôme d'enclenchement (14) par l'ouverture d'entrée (16) et la deuxième liaison d'enclenchement (13, 14) est enclenchée par l'intermédiaire d'un mouvement de rotation (R) relatif de préférence opposé des guidages d'air (1, 2) l'un par rapport à l'autre, la forme (20) ou les formes (20) est ou sont tournées jusque dans le logement de forme (24) ou jusque dans les logements de forme (24) avant qu'alors la première liaison d'enclenchement (11, 12) ne soit enclenchée.

7. Procédé de fabrication d'un ensemble de guidage d'air pour un véhicule automobile selon la revendication 6, **caractérisé en ce que** le premier canal de guidage d'air (1) et le deuxième canal de guidage d'air (2) sont fabriqués dans un procédé de moulage par soufflage et/ou dans un procédé de thermoformage.
